Europäisches Patentamt

European Patent Office

Office européen des brevets

(19)

(11) Numéro de publication : **0 012 886**
**B1**

(12) # FASCICULE DE BREVET EUROPÉEN

(45) Date de publication du fascicule du brevet :
15.12.82

(51) Int. Cl.³ : **G 06 F   3/04**, G 06 F   9/46

(21) Numéro de dépôt : 79104886.1

(22) Date de dépôt : 04.12.79

(54) Unité de commande d'entrée/sortie pour système de traitement de données.

(30) Priorité : 22.12.78 US 972381

(43) Date de publication de la demande :
09.07.80 (Bulletin 80/14)

(45) Mention de la délivrance du brevet :
15.12.82 Bulletin 82/50

(84) Etats contractants désignés :
BE CH DE FR GB NL SE

(56) Documents cités :
FR A 2 256 474
ELECTRONICS, vol. 46, no. 21, 11 octobre 1973,
New York US GLADSTONE : « Designing systems
around microprocessors », pages 97-104.
IBM   TECHNICAL   DISCLOSURE   BULLETIN,
vol. 17, no. 7, décembre 1974. New York US
EDEL : « Intelligent input/output interrupt processing », pages 1 915-1 916.
Electronic Design 6, March 15, 1978, pp. 72-75.

(73) Titulaire : International Business Machines Corporation
Armonk, N.Y. 10504 (US)

(72) Inventeur : Bourke, Donall G.
4850 NW 5th Terrace
Boca Raton, Florida 33431 (US)
Inventeur : Mendelson, Richard N.
1450 NW 4th Court
Boca Raton, Florida 33432 (US)
Inventeur : Madruga, Luis
2712 Dunlin Road
Delray Beach, Florida 33444 (US)

(74) Mandataire : Bonneau, Gérard
COMPAGNIE IBM FRANCE Département de Propriété
Industrielle
F-06610 La Gaude (FR)

EP 0 012 886 B1

Unité de commande d'entrée/sortie pour système de traitement de données

Description

Domaine Technique

La présente invention concerne un système de traitement de données et, plus particulièrement, une unité de commande d'entrée/sortie permettant de transférer des données entre un processeur principal et un ou plusieurs dispositifs d'entrée/sortie d'un système de traitement de données numériques.

État de la Technique

Le transfert des données entre la mémoire d'une unité centrale de traitement et des dispositifs d'entrée/sortie par l'intermédiaire d'une ligne commune d'entrée/sortie, ou interface, peut s'effectuer de différentes façons. Par exemple, il peut avoir lieu sous le contrôle direct d'une instruction de programme, ou être déclenché par l'unité centrale, le transfert effectif étant ultérieurement effectué sous le contrôle du dispositif périphérique intéressé, sans intervention de l'unité centrale, ou encore une logique appropriée peut être employée pour traiter les demandes d'interruption émanant de divers dispositifs périphériques et informer l'unité centrale de l'état de ces dernières. Dans le cas du système qui est décrit dans le document FR-A-2 256 474, une logique de canal reçoit les demandes d'interruption en provenance des canaux auxquels sont connectés les dispositifs périphériques, et les retransmet à un réseau de priorité permettant d'affecter lesdites demandes à des classes de priorité distinctes indépendamment des canaux.

Plusieurs des procédés utilisés comportent l'emploi de mécanismes de commande permettant aux dispositifs d'entrée/sortie de déclencher le traitement des interruptions par l'unité centrale en informant directement celle-ci de l'identité et de l'état du dispositif qui désire être pris en charge. La demande d'interruption peut amener l'unité centrale à transmettre en série à tous les dispositifs qui lui sont connectés un signal d'interrogation destiné à permettre le transfert ultérieur à cette unité centrale d'informations identifiant le dispositif et l'état particuliers qui sont à l'origine de la demande d'interruption. Une telle technique d'interrogation est décrite dans le document US-A-4 038 642.

Beaucoup de systèmes de l'art antérieur comportent une unité de commande d'entrée/sortie qui gère les transferts de données entre l'unité centrale et les dispositifs périphériques. De ce fait l'unité centrale est libérée d'un certain nombre de tâches telles que l'identification des dispositifs périphériques à l'origine des demandes d'interruption de l'unité centrale. Avec le développement récent de la technologie, il est de plus en plus courant d'utiliser un microprocesseur comme unité de traitement de l'unité de commande. Un tel système est par exemple décrit dans l'article « Multiprocessing Boosts Microcomputer » d'Electronic Design, n° 6, 15 mars 1978, pages 72 à 75.

Les unités de commande d'entrée/sortie de l'art antérieur, sont utilisables avec un unique dispositif d'entrée/sortie. Une unité de commande de ce type ne peut reconnaître qu'une unique adresse de dispositif. D'autres unités de commande connues sont utilisées avec plusieurs dispositifs d'entrée/sortie, auquel cas un circuit de comparaison d'adresses est nécessaire pour reconnaître les diverses adresses de chacun des différents dispositifs d'entrée/sortie connectés à l'unité de commande. Dans ces systèmes de l'art antérieur, la réception de l'adresse correcte d'un dispositif permet à l'unité de commande d'identifier ce dernier.

Les unités de commande de l'art antérieur ne présentent pas d'utilité directe dans le cas de dispositifs d'entrée/sortie multiples dont chacun possède une unique adresse. En l'occurrence, deux problèmes se posent. Tout d'abord, les demandes de service émanant des dispositifs d'entrée/sortie sont asynchrones (demandes émanant d'opérateurs de terminaux, par exemple), ce qui peut se traduire par un nombre excessif de demandes d'interruption et, de ce fait, par une réponse moins satisfaisante du processeur principal aux demandes de service qui lui sont alors transmises.

Le second problème réside dans le fait que les demandes de service émanant des dispositifs d'entrée/sortie peuvent provoquer un « blocage » de l'unité de commande et créer un état « occupé », « interruption en instance », aucune opération ne pouvant de ce fait être effectuée en réponse aux demandes de service déjà acceptées par le processeur principal. Ce problème a trouvé un début de solution dans le système décrit dans l'IBM Technical Disclosure Bulletin, Vol. 17, N° 7, décembre 1974, pages 1 915-16. Ce système ne traite pas les interruptions au fur et à mesure qu'elles sont reçues mais déroule un programme d'emmagasinage dans le but de les traiter plus tard « en lot ». Toutefois comme le système décrit ne comporte pas d'unité de commande d'entrée/sortie, chaque demande cause une interruption de l'unité centrale pour son emmagasinage dans la pile d'interruptions.

Exposé de l'Invention

La présente invention telle qu'elle est caractérisée dans les revendications résout ces problèmes en fournissant une unité de commande d'entrée/sortie qui, en même temps qu'elle rythme la présentation des demandes d'interruption asynchrones émanant de divers dispositifs d'entrée/sortie au processeur principal et réduit leur nombre pendant les intervalles de temps durant lesquels de nombreuses demandes sont transmises par les dispositifs d'entrée/sortie, augmente sa disponibilité vis-à-vis du programme d'entrée/sortie du processeur principal et, par conséquent, celle des dispositifs d'entrée/sortie, en empêchant la transmission au processeur des signaux « unité de commande d'entrée/sortie occupée » et « interruption en instance » en périodes d'activité intense lors desquelles l'unité de commande cherche normalement à lui transmettre un grand nombre de demandes d'interruption.

Selon la présente invention, l'unité de commande d'entrée/sortie comprend une logique d'interruption transmettant des signaux d'interruption au processeur principal qui répond à son tour par une commande de transfert à l'unité de commande, une unité de traitement connectée à la logique d'interruption et aux dispositifs d'entrée/sortie pour recevoir les demandes de service en provenance de ceux-ci et contrôler la logique d'interruption, et un dispositif d'emmagasinage connecté à l'unité de traitement pour emmagasiner les demandes de service reçues par l'unité de traitement. La logique d'interruption, prend un état activé lorsqu'aucune demande de service n'est emmagasinée dans le dispositif d'emmagasinage et un état non activé lorsqu'au moins une demande de service en provenance des dispositifs d'entrée/sortie est emmagasinée dans le dispositif d'emmagasinage. La logique d'interruption transmet un signal d'interruption au processeur principal lorsque : a) une demande de service est reçue par l'unité de traitement et b) la logique d'interruption est dans l'état activé, de manière qu'en réponse au signal d'interruption, le processeur principal transmette une commande de transfert de toutes les demandes de service emmagasinées dans le dispositif d'emmagasinage à ladite unité de traitement, la logique d'interruption étant remise dans son état non activé inhibant la génération d'un nouveau signal d'interruption tant que des demandes de service sont emmagasinées dans le dispositif d'emmagasinage.

## Brève Description des Figures

La Figure 1 représente schématiquement un système de traitement de données numériques incorporant l'unité commande d'entrée/sortie de la présente invention.

La Figure 2 représente de façon plus détaillées l'unité de commande d'entrée/sortie de la présente invention.

La Figure 3 représente schématiquement la logique d'interruption de l'unité de commande d'entrée/sortie de la présente invention.

## Mode de réalisation préféré

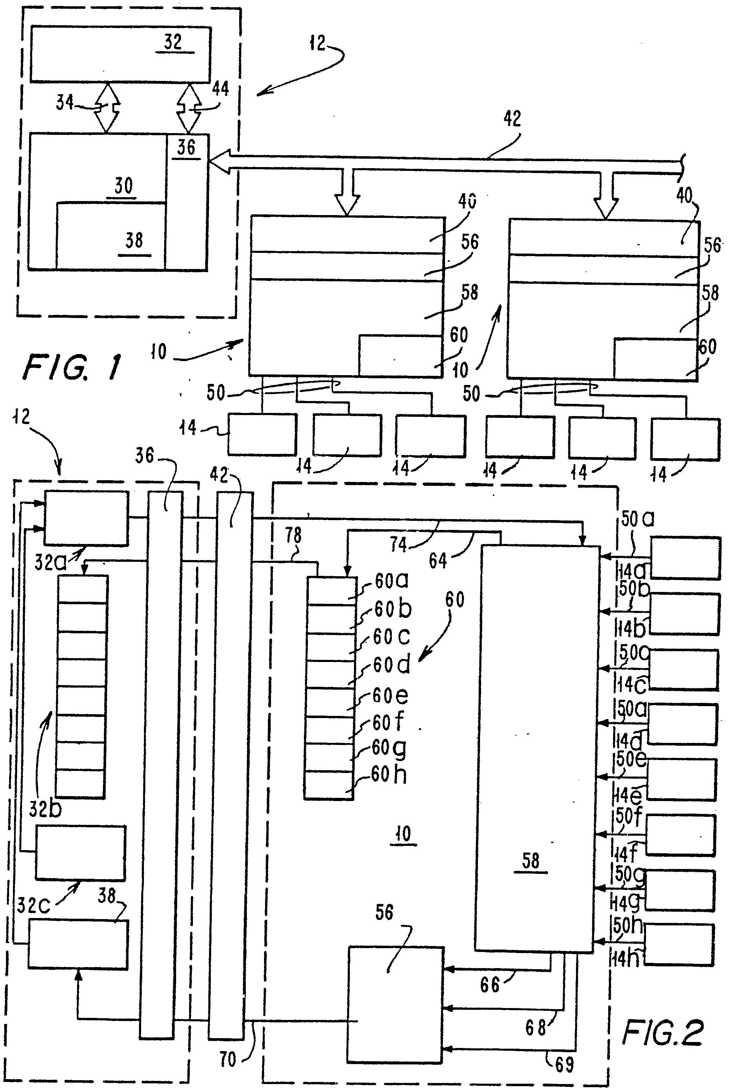

On a représenté sur la Figure 1 l'unité de commande d'entrée/sortie 10 de la présente invention qui commande le transfert de données et d'autres informations entre un processeur 12 et plusieurs dispositifs d'entrée/sortie dont chacun est désigné par la référence 14. Bien que trois dispositifs 14 seulement par unité 10 aient été représentés sur la Figure 1, il est sous-entendu que d'autres dispositifs analogues peuvent être utilisés pour chaque unité 10 en fonction de la configuration globale du système. Ce dernier doit également comporter des unités de commande 10 supplémentaires connectées aux dispositifs 14. Ces derniers sont caractérisés par le fait qu'ils sont capables d'engendrer de multiples demandes de service asynchrones destinées à être transmises au processeur principal 12.

Le processeur principal 12 comprend un processeur ou unité centrale de traitement 30 et une mémoire principale 32 dans laquelle peuvent être emmagasinées des données, des instructions machine et des informations de commande d'entrée/sortie. La mémoire 32 communique avec le processeur 30 par l'intermédiaire d'une ligne commune bidirectionnelle 34. Le processeur 30 comporte un sous-système constitué par un canal d'entrée/sortie 36, ainsi qu'une logique 38 dite de branchement d'interruption qui comporte un mécanisme de branchement d'interruption de type bien connu faisant appel à l'emploi d'une adresse d'unité de commande pour assurer un branchement à la partie interruption/service du programme d'entrée/sortie contenu dans le processeur principal 12.

Le canal d'entrée/sortie 36 communique avec la logique d'interface de canal 40 que contient l'unité de commande d'entrée/sortie 10 par l'intermédiaire d'une ligne commune dite d'interface d'entrée/sortie 42. Le canal 36 communique avec la mémoire principale 32 par l'intermédiaire d'une ligne commune bidirectionnelle 44. L'unité 10 communique avec les dispositifs d'entrée/sortie 14 par l'intermédiaire de lignes de signaux 50. Le processeur principal 12 peut être, par exemple, un calculateur du type IBM série 1, décrit dans les documents ci-après :

Manuel IBM intitulé « Series/1, Model 5, 4955 Processor Description », Réf. GA 34-0021 (première édition, Novembre 1976) ;

Manuel IBM intitulé « Series/1, 4955 Processor Theory », Réf. SY 34-0041 (première édition, Janvier 1977) ; et U.S.A. N° 4 038 642.

Ces documents (les deux manuels précités peuvent être obtenus par l'intermédiaire de toute agence IBM) décrivent de façon détaillée la réalisation et le fonctionnement du processeur principal 12, du canal 36 et de la ligne commune d'entrée/sortie 42.

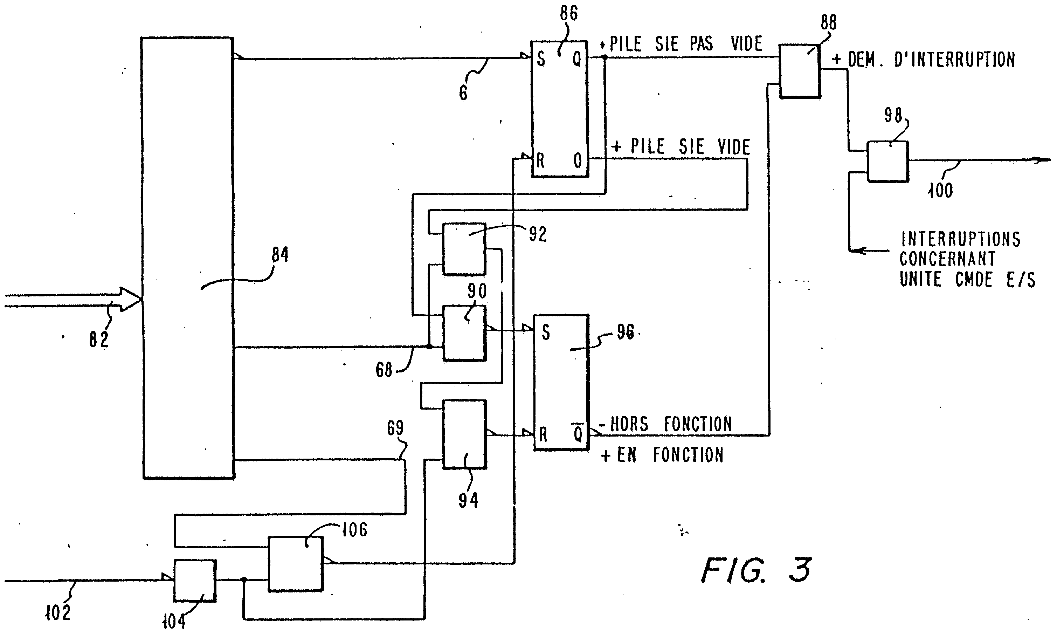

L'unité de commande d'entrée/sortie 10 comprend outre la logique d'interface de canal 40, une logique d'interruption 56 qui sera décrite plus loin à l'aide des Figures 2 et 3. L'unité 10 comprend également le microprocesseur 58 et une mémoire 60. Le microprocesseur 58 peut être, par exemple, du type décrit dans le brevet précité N° 4 038 642 et représenté sur la Figure 17 de ce dernier.

La Figure 2 représente de façon plus détaillée l'unité de commande d'entrée/sortie 10 et le

processeur principal 12. Les composants qui correspondent à ceux précédemment décrits portent les mêmes numéros de référence que sur la Figure 1. Les dispositifs d'entrée/sortie 14a à 14h transmettent, par l'intermédiaire des lignes de données 50a à 50h, des données comprenant des demandes de service asynchrones au microprocesseur 58. Ce dernier transmet ces demandes de service, par l'intermédiaire d'une ligne de signaux 64, à la mémoire 60, qui comporte une pile de registres où sont emmagasinés les éléments d'interruption de dispositif (SIE). L'élément SIE à un dispositif d'entrée/sortie 14 quelconque comprend l'adresse de ce dispositif, un code d'identification de demande et l'état du dispositif. L'adresse du dispositif n'est pas une adresse d'unité de commande, mais une sous-adresse qui est utilisée dans l'unité 10 pour identifier le dispositif 14 particulier dont il s'agit.

Le microprocesseur 58 transmet à la logique d'interruption 56, par l'intermédiaire d'une ligne de signaux 66, le signal représentant la demande de service, et, par l'intermédiaire de la ligne de signaux 68, les signaux représentant la commande de transfert : « lecture d'élément SIE (RSIE), et mise en fonction conditionnelle (AOC). Par ailleurs, le microprocesseur 58 transmet, par l'intermédiaire de la ligne de signaux 69, un signal appelé « instruction RSIE exécutée ». La fonction de ce signal sera expliquée plus loin. La logique d'interruption 56 engendre le signal de demande d'interruption qui est appliqué, par l'intermédiaire de la ligne de signaux 70, à la ligne commune 42 et à la logique 38 par l'intermédiaire du canal 36. La logique 38 est utilisée en conjonction avec le programme d'entrée/sortie 32a de la mémoire principale 32.

Le programme 32a engendre les signaux de commande de transfert RSIE, AOC et les commandes de service des dispositifs qui sont appliquées au microprocesseur 58 par l'intermédiaire de la ligne de signaux 74, du canal 36 et de la ligne commune d'entrée/sortie 42. Les signaux de commande RSIE, AOC, qui permettent de mettre en fonction ou hors fonction la logique d'interruption 56 selon que les demandes de service engendrées par les dispositifs d'entrée/sortie 14a à 14h sont en cours d'exécution ou en instance dans la pile 60, composée des éléments SIE, constitue une caractéristique importante de la présente invention.

Le fonctionnement de l'unité de commande d'entrée/sortie 10 va maintenant être décrit en se reportant à la Figure 2. Pour les besoins de la présente description, on supposera que la logique d'interruption 56 est initialement mise en fonction. De ce fait, si l'un des dispositifs d'entrée/sortie 14a à 14h transmet une demande de service au microprocesseur 58, la logique 56 applique le signal de demande d'interruption à la logique 38 en vue d'un branchement au programme d'entrée/sortie 32a. Ce dernier signal constitue une interruption asynchrone transmise au processeur principal 12. N'importe lequel des dispositifs d'entrée/sortie 14a à 14h peut transmettre une demande de service au microprocesseur que comporte l'unité 10.

Lors de la réception d'une telle demande de service par l'intermédiaire des lignes de signaux 50a à 50 h (par exemple, d'une demande reçue du dispositif d'entrée/sortie 14a par l'intermédiaire de la ligne 50a), le microprocesseur 58 établit un élément SIE 60a à 60h pour celui des dispositifs d'entrée/sortie 14a à 14h qui a formulé une demande de service. Le microprocesseur 58 engendre alors le signal de demande de service qui est transmis par l'intermédiaire de la ligne de signaux 66 à la logique d'interruption 56, laquelle se trouve à cet instant en fonction. La logique 56 engendre alors le signal de demande d'interruption qui est transmis au processeur 12.

Le processeur principal 12 reconnaît ultérieurement le signal de demande d'interruption et le programme 32a engendre les signaux de commande de transfert RSIE, AOC, qui sont transmis au microprocesseur 58 que comporte l'unité de commande d'entrée/sortie 10 par l'intermédiaire de la ligne de signaux 74. Les commandes RSIE, AOC mettent en fonction la logique d'interruption 56 s'il n'existe pas d'interruption en cours ou d'élément SIE 60a à 60h en attente. Au contraire les signaux de commande RSIE, AOC mettent hors fonction la logique 56 si l'un quelconque des éléments SIE 60a à 60h de la mémoire 60 est actif. C'est dans cette dernière situation que l'on se trouve en l'occurrence puisque l'élément SIE 60a afférent au dispositif d'entrée/sortie 14a, qui, dans cet exemple, a formulé une demande de service, est actif dans la pile 60. De ce fait, les données de l'élément SIE actif sont transférées à une mémoire 32b d'éléments SIE que comporte la mémoire principale 32 du processeur principal 12, par l'intermédiaire de la ligne de signaux 78, de la ligne commune d'entrée/sortie 42 et du canal 36. Une fois les signaux de commande de transfert RSIE, AOC exécutés, le microprocesseur 58 informe la logique d'interruption 56, par l'intermédiaire de la ligne de signaux 69, qu'il n'existe aucun élément SIE actif en instance dans la mémoire 60. Le programme d'entrée/sortie 32a prend alors en charge les données de l'élément SIE en instance dans la mémoire 32b.

Lorsqu'un second dispositif d'entrée/sortie, tel le dispositif 14b, transmet une demande de service au microprocesseur 58, ce dernier établit un élément SIE 60b pour ce dispositif 14b. Le microprocesseur 58 engendre alors une demande de service qui est transmise à la logique d'interruption 56 par l'intermédiaire de la ligne de signaux 66. Cependant, comme la logique 56 se trouve hors fonction en raison de l'application antérieure des signaux de commande de transfert RSIE, AOC au microprocesseur 58, aucune demande n'est transmise par la logique 56 au processeur principal 12. Une caractéristique importante de la présente invention réside dans le fait que, lorsque la logique 56 se trouve hors fonction, les commandes transmises par le processeur principal 12 à l'unité de commande d'entrée/sortie 10 en réponse à la demande de service émanant du dispositif d'entrée/sortie 14a, ne sont pas bloquées parce que l'unité 10 ne se trouve pas dans un état dit d'« interruption en instance ».

On supposera d'autre part qu'un troisième dispositif d'entrée/sortie, 14c, transmet ensuite une demande de service au microprocesseur 58. Ce dernier établit un élément SIE 60c afférent à ce dispositif 14c, et transmet le signal de demande de service à la logique d'interruption 56, mais, comme dans le cas de la demande précédente relative au dispositif 14b, cette logique n'engendre pas de demande vers le processeur principal. Une fois qu'il a assuré la prise en charge de l'élément SIE relatif au dispositif 14a dans la mémoire 32b du processeur sous le contrôle du programme 32c, dit d'achèvement de service d'élément SIE, le programme d'entrée/sortie 32a engendre de nouveau les signaux de commande de transfert RSIE, AOC à l'intention de l'unité de commande d'entrée/sortie 10. Cette dernière n'est pas occupée, aucune interruption n'étant en instance, et peut par conséquent répondre à la commande qu'elle a reçue.

Etant donné que les éléments SIE 60b et 60c sont en instance dans la pile 60, la logique d'interruption 56 reste hors fonction. En réponse aux signaux de commande de transfert RSIE, AOC émanant du processeur principal 12, les données contenues dans les éléments SIE 60b et 60c et afférents aux dispositifs d'entrée/sortie 14b et 14c sont transférées à la mémoire 32b du processeur principal 12. Une fois ce transfert exécuté, le microprocesseur 58 informe la logique d'interruption 56, par l'intermédiaire de la ligne de signaux 69, qu'il ne reste aucun élément SIE en instance dans la mémoire 60. Le programme d'entrée/sortie 32a assure alors la prise en charge des éléments SIE relatifs aux dispositifs d'entrée/sortie 14b et 14c. L'événement représentant la fin de cette prise en charge est signalé par le programme 32c, qui provoque à nouveau la transmission à l'unité de commande d'entrée/sortie 10 de signaux de commande de transfert RSIE, AOC par le programme d'entrée/sortie 32a. Etant donné que la pile 60 ne contient aucun élément SIE actif en instance, le microprocesseur 58 remet en fonction la logique d'interruption 56. Cette dernière est alors en état de pouvoir interrompre le processeur principal 12, et la prochaine demande de service reçue d'un dispositif d'entrée/sortie 14 provoquera la transmission par cette logique d'une nouvelle demande d'interruption au processeur principal 12.

Il ressort de ce qui précède que l'unité de commande d'entrée/sortie 10 a permis de supprimer deux demandes d'interruption destinées au processeur 12 dans le cas de l'opération qui vient d'être décrite, dans laquelle les demandes de service étaient transmises par trois dispositifs d'entrée/sortie, 14a à 14c. Les signaux de commande de transfert RSIE, AOC permettent au processeur 12 de rythmer les interruptions demandées par les dispositifs d'entrée/sortie 14 et de réduire la fréquence des interruptions pendant les intervalles de temps durant lesquels de nombreuses demandes sont émises par les dispositifs. La disponibilité des dispositifs d'entrée/sortie est donc maintenue vis-à-vis du programme d'entrée/sortie 32a aux fins de la prise en charge de leurs demandes. D'autre part, le programme d'entrée/sortie 32a du processeur principal conserve ses caractéristiques d'interruption ou celles qui sont fonction d'événements déterminés.

La Figure 3 représente schématiquement la logique d'interruption 56 et est écrite ci-après en relation avec les Figures 18 et 19 du brevet précité n° 4 038 642. La ligne commune d'adressage 82 du microprocesseur 58 est connectée au décodeur d'instructions 84 (cette ligne 82 correspond à la ligne commune d'adresses 127 du microprocesseur de la Figure 18 dudit brevet). Une fois que le microprocesseur 58 a établi un des éléments SIE 60a à 60b, le décodeur d'instructions 84 engendre le signal « – demande d'interruption (pile SIE pas vide) », qui est appliqué à une bascule 86. Une sortie de cette dernière représentant le signal « + pile SIE pas vide » est appliqué aux circuits ET 88 et 90. Une sortie de la bascule 86 représentant le signal « + pile SIE vide » est appliquée à un circuit ET 92. Le circuit ET 90 reçoit également le signal « + RSIE, AOC » engendré par le décodeur 84. La sortie du circuit ET 92 est appliquée à un circuit OU 94 qui reçoit également du décodeur 84 le signal « + commande RSIE exécutée (pile SIE vide) », indiquant ainsi que la pile 60 ne contient aucun élément SIE en instance.

La sortie du circuit ET 90 et celle du circuit OU 94 sont appliquées à une bascule 96 qui engendre le signal « – hors fonction (+ en fonction) » qui est appliqué au circuit ET 88 afin d'engendrer le signal « + demande d'interruption ». Si le circuit 88 est passant, sa sortie est appliquée à un circuit OU 98 qui engendre le signal « + établissement de demande d'interruption » sur la ligne de signaux 100 (cette dernière correspond à la ligne de signaux 176 de la Figure 19 du brevet précité). Le circuit OU 98 reçoit également des signaux d'interruption relatifs au fonctionnement de l'unité de commande d'entrée/sortie 10, et non des dispositifs d'entrée/sortie 14 particuliers.

Le signal « – fonction OU des restaurations » est appliqué par l'intermédiaire de la ligne de signaux 102 à un inverseur 104 (la ligne 102 correspond au signal du même nom qui est appliqué au circuit OU 178 de la Figure 19 du brevet précité). La sortie de l'inverseur 104 est appliquée à un circuit OU 106 et au circuit OU 94. Le circuit 106 reçoit également le signal « + commande RSIE exécutée (pile SIE vide) » du décodeur d'instructions 84 et engendre une sortie qui est transmise à la bascule 86. Le signal « – fonction OU des restaurations » permet de restaurer la bascule 86 et, par l'intermédiaire du circuit OU 106, la bascule 96. En conséquence, les bascules 86 et 96 sont initialement remises dans les états respectifs « pile SIE vide » et « en fonction ».

Il ressort de ce qui précède que l'unité de commande d'entrée/sortie de la présente invention permet de rythmer la présentation à un processeur principal des demandes de service asynchrones émanant de plusieurs dispositifs d'entrée/sortie, et de réduire le nombre d'interruptions résultant de ces demandes pendant les intervalles de temps durant lesquels de nombreuses demandes sont émises par les dispositifs d'entrée/sortie.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Unité de commande d'entrée/sortie (10) permettant de transférer des données entre un processeur principal (12) et plusieurs dispositifs d'entrée/sortie (14) d'un système de traitement de données dans lequel ces dispositifs d'entrée/sortie engendrent de multiples demandes de service asynchrones destinées au processeur principal ; ladite unité qui comprend une logique d'interruption (56) transmettant des signaux d'interruption audit processeur principal qui répond à son tour par une commande de transfert à ladite unité de commande, étant caractérisée en ce que :

elle comprend une unité de traitement (58) connectée à la logique d'interruption et auxdits dispositifs d'entrée/sortie pour recevoir les demandes de service en provenance desdits dispositifs d'entrée/sortie et contrôler ladite logique d'interruption, et un dispositif d'emmagasinage (60) connecté à l'unité de traitement pour emmagasiner lesdites demandes de service reçues par ladite unité de traitement,

ladite logique d'interruption (56) prend un état activé lorsqu'aucune demande de service n'est emmagasinée dans ledit dispositif d'emmagasinage et un état non activé lorsqu'au moins une demande de service en provenance desdits dispositifs d'entrée/sortie est emmagasinée dans ledit dispositif d'emmagasinage ; ladite logique d'interruption transmettant un signal d'interruption (70) audit processeur principal lorsque : a) une demande de service est reçue par ladite unité de traitement et b) la logique d'interruption est dans l'état activé, de manière qu'en réponse audit signal d'interruption, ledit processeur principal transmette une commande de transfert (74) de toutes les demandes de service emmagasinées dans ledit dispositif d'emmagasinage à ladite unité de traitement, ladite logique d'interruption étant remise dans son état non activé inhibant la génération d'un nouveau signal d'interruption tant que des demandes de service sont emmagasinées dans ledit dispositif d'emmagasinage.

2. Unité de commande (10) selon la revendication 1 dans laquelle :

ladite unité de traitement (58) transmet un premier signal (69) à ladite logique d'interruption (56) lorsqu'aucune demande de service n'est emmagasinée dans ledit dispositif d'emmagasinage et transmet un deuxième signal (66) à ladite logique d'interruption en réponse à la réception d'une demande de service en provenance d'un desdits dispositifs d'entrée/sortie (14),

ladite logique d'interruption passe de l'état non activé à l'état activé lorsqu'elle reçoit ledit premier signal de ladite unité de traitement et transmet ledit signal d'interruption (70) audit processeur principal lorsqu'elle reçoit ledit deuxième signal.

3. Unité de commande (10) selon la revendication 1 ou 2 dans laquelle ladite unité de traitement (58) transmet, lorsqu'elle reçoit la commande de transfert (74) en provenance dudit processeur principal, un signal de commande (68) à ladite logique d'interruption (56) de sorte que cette dernière reste dans l'état non activé et ne peut pas transmettre de signal d'interruption (70) audit processeur principal (12) pendant qu'a lieu le transfert des demandes de service dudit dispositif d'emmagasinage (60) audit processeur principal et le transfert des données entre ce dernier et lesdits dispositifs d'entrée/sortie (14).

4. Unité de commande (10) selon l'une des revendications précédentes dans laquelle ladite unité de traitement (58) est un microprocesseur.

5. Unité de commande (10) selon l'une des revendications précédentes dans laquelle ledit dispositif d'emmagasinage (60) est formé d'une pile de registres (60a à 60h).

**Claims**

1. An input/output control unit (10) for transferring data between a host processor (12) and a plurality of I/O devices (14) of a data processing system wherein said I/O devices generate multiple asynchronous service requests for transfer to the host processor ; said control unit, which includes interrupt logic (56) transmitting interrupt signals to said host processor which, in its turn, responds by generating a transfer command to said control unit, being characterized in that :

it includes a processing unit (58) connected to the interrupt logic and to said input/output devices in order to receive the service requests coming from said I/O devices and to control said interrupt logic, and storage means (60) connected to the processing unit in order to store said service requests received by said processing unit,

said interrupt logic (56) assumes an activated state when no service request is stored in said storage means, and a non-activated state when at least one service request from said I/O devices is stored in said storage means ; said interrupt logic transmitting an interrupt signal (70) to said host processor when : a) a service request is received by said processing unit and b) the interrupt logic assumes an activated state, so that, in response to said interrupt signal, said host processor transmits a transfer command (74) of all the service requests that are stored in said storage means, to said processing unit, said interrupt logic reassuming its non-activated state inhibiting the generation of another interrupt signal as long as service requests are present in said storage means.

2. A control unit (10) according to claim 1, wherein :

said processing unit (58) transmits a first signal (69) to said interrupt logic (56) when no service request is stored in said storage means, and transmits a second signal (66) to said interrupt logic in response to the reception of a service request from said I/O devices (14),

said interrupt logic changes from its non-activated state to its activated state when it receives said first signal from said processing unit, and transmits said interrupt signal (70) to said host processor when it receives said second signal.

3. A control unit (10) according to claim 1 or claim 2, wherein said processing unit (58) transmits, when it receives the transfer command (74) from said host processor, a control signal (68) to said interrupt logic (56) so that the latter remains in its non-activated state and cannot transmit any interrupt signal (70) to said host processor (12) while the service requests are being transferred from said storage means (60) to said host processor and the data are being transferred between the latter and said I/0 devices (14).

4. A control unit (10) according to any one of the preceding claims, wherein said processing unit (58) is a microprocessor.

5. A control unit (10) according to any one of the preceding claims, wherein said storage means (60) is comprised of a stack of registers (60a to 60h).

## Ansprüche

1. Eingabe/Ausgabe-Steuereinheit (10) zum Übertragen von Daten zwischen einem zentralen Rechner (12) und einer Vielzahl von Eingabe/Ausgabe-Geräten (14) eines Datenverarbeitungssystems, in welcher diese Eingabe/Ausgabe-Geräte mehrfache asynchrone, an den zentralen Rechner zu leitende Dienstanforderungen erzeugen ; wobei die eine Unterbrechungslogik (56) einschliessende Steuereinheit Unterbrechungssignale an den zentralen Rechner überträgt, der seinerseits mit dem Erzeugen eines Übertragungsbefehls an die Steuereinheit antwortet, dadurch gekennzeichnet, dass :

die Steuereinheit einschliesst : eine an die Unterbrechungslogik und an die Eingabe/Ausgabe-Geräte angeschlossene Prozessor-Einheit (58) zum Empfang der von den Eingabe/Ausgabe-Geräten kommenden Dienstanforderungen und zum Steuern der Unterbrechungslogik, und ein mit der Prozessor-Einheit verbundenes Speichermittel (60) zum Speichern der von der Prozessor-Einheit erhaltenen Dienstanforderungen,

die Unterbrechungslogik (56) einen aktiven Status annimmt, wenn keine Dienstanforderung in dem Speichermittel zu speichern ist, und einen inaktiven Zustand, wenn wenigstens eine von den Eingabe/Ausgabe-Geräten kommende Dienstanforderung in dem Speichermittel zu speichern ist, wobei die Unterbrechungslogik an den zentralen Rechner ein Unterbrechungssignal (70) überträgt wenn a) von der Prozessor-Einheit eine Dienstanforderung erhalten wird, und b) die Unterbrechungslogik im aktiven Status ist, so dass als Antwort auf das Unterbrechungssignal der zentrale Rechner einen Übertragungsbefehl (74) zum Übertragen aller im Speichermittel gespeicherten Dienstanforderungen an die Prozessor-Einheit sendet, wobei die Unterbrechungslogik in ihren inaktiven Status zurückkehrt, der das Erzeugen eines neuen Unterbrechungssignales blockiert, solange die Dienstanforderungen in dem Speichermittel gespeichert sind.

2. Steuereinheit (10) nach Anspruch 1, in welcher :

die Prozessor-Einheit (58) ein erstes Signal (69) an die Unterbrechungslogik (56) überträgt, wenn keine Dienstanforderung in dem Speichermittel gespeichert ist, und ein zweites Signal (66) an die Unterbrechungslogik überträgt als Antwort auf das Erhalten einer von den Eingabe/Ausgabe-Geräten (14) kommenden Dienstanforderung,

die Unterbrechungslogik vom aktiven Status in den inaktiven Status geht, wenn sie das erste Signal der Prozessor-Einheit erhält und das Unterbrechungssignal (70) zum zentralen Rechner übermittelt, wenn sie das zweite Signal erhält.

3. Steuereinheit (10) nach Anspruch 1 oder 2, in welcher die Prozessor-Einheit (58) bei Erhalt des Übertragungsbefehls (74) vom zentralen Rechner ein Befehlssignal (68) an die Unterbrechungslogik (56) sendet, so dass letztere im inaktiven Status bleibt und kein Unterbrechungssignal (70) an den zentralen Rechner (12) senden kann, wenn die Übertragung der Dienstanforderungen vom Speichermittel (60) an den zentralen Rechner und die Datenübertragung zwischen letzterem und den Eingabe/Ausgabe-Geräten (14) stattfindet.

4. Steuereinheit (10) nach einem der vorhergehenden Ansprüche, in welcher die Prozessor-Einheit (58) ein Mikroprozessor ist.

5. Steuereinheit (10) nach einem der vorhergehenden Ansprüche, in welcher das Speichermittel (60) durch einen Stapel von Registern (60a bis 60h) gebildet wird.

0 012 886

FIG. 1

FIG.2

FIG. 3

86

+ PILE SIE PAS VIDE

88

+ DEM. D'INTERRUPTION

S   Q

6

R   O

+ PILE SIE VIDE

98

100

INTERRUPTIONS
CONCERNANT
UNITE CMDE E/S

92

84

90

S

96

68

82

94

69

R   Q̄

- HORS FONCTION

+ EN FONCTION

106

102

104

0 012 886